# EUROPÄISCHE PATENTSCHRIFT

(11) **EP 0 932 867 B1**
(45) Veröffentlichungstag und Bekanntmachung des Hinweises auf die Patenterteilung: **27.10.2010**
(21) Anmeldenummer: 97944712.5
(22) Anmeldetag: 15.09.1997
(51) Int. Cl.: G06F 12/14, G06F 21/00

(54) **ELEKTRONISCHE DATENVERARBEITUNGSSCHALTUNG**
ELECTRONIC DATA PROCESSING CIRCUIT
CIRCUIT ELECTRONIQUE DE TRAITEMENT DE DONNEES

(30) Priorität: 15.10.1996 DE 19642560
(43) Veröffentlichungstag der Anmeldung: 04.08.1999
(73) Patentinhaber: Infineon Technologies AG, 85579 Neubiberg (DE)
(72) Erfinder: PFAB, Stefan, D-82049 Großhesselohe (DE)
(74) Vertreter: Viering, Jentschura & Partner
(86) Internationale Anmeldenummer: PCT/DE1997/002070
(87) Internationale Veröffentlichungsnummer: WO 1998/016883

(56) Entgegenhaltungen:
- EP-A- 0 449 256
- WO-A-95/16238
- GB-A- 2 099 616
- US-A- 4 598 170
- US-A- 5 386 469
- "SECTION 1: INTRODUCTION" DATA BOOK SOFT MICROCONTROLLER, 6.Oktober 1993, Seiten 1-3, 7, 8, 73, 77-80, 82, 152-156, 229, 290-292, XP002053731

## Beschreibung

Die Erfindung betrifft eine elektronische Datenverarbeitungsschaltung mit einer Betriebsbaugruppe wie beispielsweise einem Mikroprozessor, mit wenigstens einem Datenspeicher und mit einem sich zwischen Datenspeicher und Betriebsbaugruppe erstreckendem Datenbus, wobei der Datenverkehr zwischen der Betriebsbaugruppe und dem wenigstens einen Datenspeicher verschlüsselt wird.

Die gattungsgemäßen elektronischen Datenverarbeitungsschaltungen werden häufig bei sicherheitskritischen Anwendungen eingesetzt. Dabei werden im Datenspeicher vertrauliche Daten, Geldwerte und Zugangsberechtigungen abgelegt, die von der Betriebsbaugruppe beispielsweise auf eine externe Anforderung hin verarbeitet werden.

Da der Speicher Informationen enthält, auf die möglichst nicht zugegriffen werden soll, ist es notwendig, Sicherheitsmaßnahmen gegen Manipulationen der elektronischen Datenverarbeitungsschaltung zu treffen.

Wenn eine gattungsgemäße elektronische Datenverarbeitungsschaltung als integrierter Schaltkreis ausgeführt ist, kann diese mit verschiedenen Passivierungsschichten abgedeckt werden. Dabei können die Passivierungsschichten so angelegt sein, dass eine Entfernung einer Passivierungsschicht die Zerstörung des Datenspeichers zur Folge hat. Weiterhin kann man den Datenspeicher in tieferliegenden Schichten des integrierten Schaltkreises vergraben, so dass der Zugriff auf ihn erschwert wird.

Eine weitere Möglichkeit, eine elektronische Datenverarbeitungsschaltung gegen unerwünschte Manipulationen zu schützen, besteht in der Verwendung von Sensoren, die Betriebsbedingungen der elektronischen Datenverarbeitungsschaltung abtasten. Sobald ein von einem Sensor abgetastete Wert außerhalb eines normalen Wertes liegt, werden entsprechende Sicherungsmaßnahmen ausgelöst, die zu einer Inaktivierung der elektronischen Datenverarbeitungsschaltung oder auch zu einem Löschen des Datenspeichers führen.

Weiterhin gibt es auch Software-Sensoren, die den Betrieb der Betriebsbaugruppe auf verbotene Befehle hin oder auf Zugriffe auf Adressbereiche hin überwachen, die für einen bestimmungsgemäßen Betrieb gesperrt sind. Außerdem kann die Zugangssequenz auf ihre Richtigkeit hin überwacht werden.

Schließlich ist es noch bekannt, in einem besonderen Herstellungsmodus erlaubte Speicherzugriffe der Betriebsbaugruppe auf den Datenspeicher durch besondere Hardware-Vorrichtungen wie beispielsweise auftrennbar ausgestaltete Verbindungsbahnen einzuschränken.

Die Druckschrift EP0449256 offenbart eine elektronische Datenverarbeitungsschaltung mit einem Mikroprozessor und zwei Datenspeichern, wobei im Bereich zwischen den die Datenspeicher und die Betriebsbaugruppe verbindenden Datenleitungen des Datenbuses eine Verschlüsselungsbaugruppe vorgesehen ist.

Die Druckschrift GB-A-2099616 beschreibt eine elektronische Datenverarbeitungsschaltung mit einem Mikroprozessor und einem Datenspeicher, der verschlüsselte Daten speichert, wobei im Bereich zwischen dem Mikroprozessor und dem Datenspeicher eine Entschlüsselungsbaugruppe und eine Verschlüsselungsbaugruppe parallel auf einem Datenbus angebracht sind.

In dem Dokument "Section 1: Introduction Data Book Soft Microcontroller, 6. Oktober 1993, Seiten 1-3, 7, 8, 73, 77-80, 82, 152-156, 229, 290-292" werden Speicherdaten mittels einem Algorithmus und einem Schlüssel, der durch einen Hardwarezufallsgenerator generiert wird, verschlüsselt.

Die US 5,386,469 beschreibt einen Schlüsselgenerator, der einen Schlüssel generiert, um verschlüsselte Instruktionen von einem Speicher mittels eines EXOR-Gliedes zu entschlüsseln, um die entschlüsselten Instruktionen dann an einen Mikroprozessor zu senden.

Die US 4,598,170 beschreibt die Verschlüsselung von Daten indem die Anschlußreihenfolge von den Datenleitungen des Datenbuses selektiv verändert wird.

In der WO-A-95/16238 werden die Schlüssel, mittels denen verschlüsselt bzw. entschlüsselt wird, in einer Flash-Zelle abgelegt.

Trotz der bevorstehend ausgeführten Sicherheitsmaßnahmen kommt es dennoch gelegentlich zu unerwünschten Manipulationen an den gattungsgemäßen elektronischen Datenverarbeitungsschaltungen.

Es ist daher Aufgabe der Erfindung, eine gattungsgemäße elektronische Datenverarbeitungsschaltung bereitzustellen, die einen verbesserten Schutz gegen unerwünschte Veränderungen aufweist.

Diese Aufgabe wird gemäß der Erfindung durch eine elektronische Datenverarbeitungsschaltung gemäß Anspruch 1 gelöst.

Die Erfindung beruht auf der erfindungswesentlichen Erkenntnis, daß sich durch neue technische Verfahren die Manipulierbarkeit gerade von als integrierte Schaltkreise ausgeführte elektronische Datenverarbeitungsschaltungen erleichtert hat. So ist aus der Sicht eines Manipulierers eine elektronische Datenverarbeitungsschaltung in einem integrierten Schaltkreis nicht mehr nur als Chip in seiner Gesamtheit zu sehen, sondern als ein aus einzelnen Komponenten auf einem Siliziumträger bestehendes System, bei dem auf die Komponenten separat zugegriffen werden kann.

Demzufolge gibt es die Möglichkeit, durch Beobachtung des Datenverkehrs auf dem Datenbus oder durch Auslesen des Datenspeichers Rückschlüsse auf die im Datenspeicher gespeicherten Informationen zu ziehen, so daß eine Manipulation erleichtert wird.

Gemäß einer weiteren erfindungswesentlichen Erkenntnis lassen sich viele Manipulationen an den gattungsgemäßen elektronischen Datenverarbeitungsschaltungen darauf zurückführen, daß es gelungen ist, den Datenverkehr auf dem Datenbus "abzuhören", so daß der Programmablauf in der Betriebsbaugruppe beobachtet und unerwünschterweise verstanden werden kann.

Gemäß der Erfindung wird vorgeschlagen, die Daten in der elektronischen Datenverarbeitungsschaltung verschlüsselt zu transportieren, wobei zwischen Datenbus und Datenspeicher bzw. Betriebsbaugruppe und Datenbus Einrichtungen vorgesehen sind, um den auf dem Datenbus transportierten Datenverkehr zu verschlüsseln und zu entschlüsseln. Die derartigen Einrichtungen werden nachfolgend mit "Verschlüsselungsbaugruppe" bezeichnet, wobei diese Bezeichnung ausdrücklich nicht auf Einrichtungen beschränkt ist, die lediglich eine Verschlüsselung ausführen. Gemäß dem Grundgedanken der Erfindung sind mit dieser Bezeichnung auch Einrichtungen gemeint, die sowohl eine Verschlüsselung als auch eine Entschlüsselung bzw. nur eine dieser beiden Operationen ausführen.

Durch die erfindungsgemäße Ausgestaltung der elektronischen Datenverarbeitungsschaltung ist gewährleistet, daß selbst bei einem erfolgreichen Nachverfolgen des Datenverkehrs auf dem Datenbus nicht direkt auf die im Datenspeicher gespeicherten Daten geschlossen werden kann. Weiterhin ist es nicht ohne weiteres möglich, aus den beim Nachverfolgen des Datenverkehrs auf dem Datenbus gewonnenen Informationen auf den Programmablauf zurückzuschließen. Selbst bei einem erfolgreichen Auslesen der im Datenspeicher gespeicherten Daten kann nämlich nicht ohne weiteres auf deren Bedeutung zurückgeschlossen werden, da diese für einen unbefangenen Beobachter keinen Sinn ergeben.

Dabei ist es gemäß der Erfindung besonders vorteilhaft, daß die Verschlüsselung und Entschlüsselung gemäß der Erfindung über den gesamten Chip verteilt bzw. disloziert erfolgt, weil für eine erfolgreiche Manipulation eine gleichzeitige Beobachtung von mehreren Stellen der elektronischen Datenverarbeitungsschaltung notwendig wäre, was technisch nur schwer durchzuführen ist.

Dabei ist bei einem mit Latch-Zwischenspeicher zur Zwischenspeicherung von Zugriffen auf den Datenspeicher versehenen elektronischen Datenverarbeitungsschaltungen wesentlich, daß die Verschlüsselungsbaugruppe so angeordnet wird, daß der Inhalt des Latch-Zwischenspeichers stets verschlüsselt ist. Der Inhalt der Latches kann nämlich relativ leicht beobachtet werden, so daß deren Inhalt im Betrieb der erfindungsgemäßen Datenverarbeitungsschaltung sicherheitshalber verschlüsselt vorliegen muß.

Die Verschlüsselung und Entschlüsselung kann sich gemäß der Erfindung bis in eine CPU einer erfindungsgemäßen Datenverarbeitungsschaltung hinein erstrecken. Darüber hinaus kann die Verschlüsselung und die Entschlüsselung auch voneinander unabhängig in mehreren Verschlüsselungsbaugruppen erfolgen.

Schließlich ergibt sich noch ein Vorteil bei Datenverarbeitungsschaltungen, die in einer Multitasking-Verarbeitung verschiedene Applikationen simultan verarbeiten. Dann können durch geeignete Verschlüsselung verschiedenen Applikationen bzw. Tasks verschiedene Datenspeicher zugeordnet werden, wobei für jede Task ein unterschiedlicher Schlüssel vereinbart wird. Dadurch kann eine Task nicht auf Daten der anderen Task zugreifen.

Zusammenfassend läßt sich daher feststellen, daß es gemäß der Erfindung nun nicht mehr genügt, die Datenverarbeitungsschaltung nur physikalisch zu untersuchen. Zusätzlich muß nun insbesondere unter gleichzeitiger Beobachtung mehrerer Komponenten auch der in der Verschlüsselungsbaugruppe bzw. in den Verschlüsselungsbaugruppen gespeicherte Schlüssel und gegebenenfalls die Aktivierung dieses Schlüssels erkannt werden.

In Ausbildung der Erfindung ist die Verschlüsselungsbaugruppe so ausgebildet, daß Datenverkehr auf dem Datenbus mittels eines Verschlüsselungs-Algorithmus verschlüsselbar ist. Eine derartig ausgebildete Verschlüsselungsbaugruppe bringt den Vorteil mit sich, bei einer Massenfertigung besonders kostengünstig herstellbar zu sein. Jedoch dauert eine Verschlüsselung mit einem Algorithmus sehr lang, da dadurch umfangreiche Berechnungen in der Betriebsbaugruppe notwendig werden. Ein Echtzeit-Betrieb dieser erfindungsgemäßen Datenverarbeitungsschaltung ist daher derzeit noch nicht möglich.

In weiterer Ausgestaltung der Erfindung sind die erste und die zweite Verschlüsselungsbaugruppe so ausgebildet, dass Datenverkehr auf dem Datenbus mittels Hardware-Verschlüsselung verschlüsselt wird. Gerade bei Hardware-Verschlüsselung ist ein Betrieb der erfindungsgemäßen Datenverarbeitungsschaltungen in Echtzeit bereits auf sehr einfache Weise zu verwirklichen, und zwar sowohl bei Lese- als auch bei Schreibzugriff auf den Datenspeicher.

Eine Hardware-Verschlüsselung kann gemäß der Erfindung mit einer ersten oder einer zweiten Verschlüsselungsbaugruppe erfolgen, die so ausgebildet ist, dass die Wertigkeiten einzelner Bit des Datenverkehrs selektiv änderbar ist. Dann erscheinen Bits, die im Speicher beispielsweise als "LOW" abgelegt sind, im Datenverkehr auf dem Datenbus als "HIGH". Dies kann zum Beispiel mit einer Verschlüsselungsbaugruppe erfolgen, die wenigstens ein EXOR-Glied aufweist.

In weiterer Ausgestaltung der Erfindung kann die erste oder die zweite Verschlüsselungsbaugruppe so ausgebildet sein, dass die Anschlussreihenfolge von Datenleitungen des Datenbus selektiv änderbar ist. Dies äußert sich nach außen hin so, als ob einzelne Bitleitungen des Datenbus vertauscht wären.

Schließlich kann die Hardware-Verschlüsselung bei der erfindungsgemäßen Datenverarbeitungsschaltung auch durch eine Verschlüsselungsbaugruppe ausgeführt werden, die so ausgebildet ist, dass der Datenverkehr zwischen Datenbus und Betriebsbaugruppe und/oder zwischen Datenbus und Datenspeicher wenigstens teilweise selektiv verzögerbar ist. Dadurch wird auf dem Datenbus ein Datenverkehr vorgetäuscht, der keinen Bezug zu dem momentanen Betriebszustand der erfindungsgemäßen elektronischen Datenverarbeitungsschaltung hat. Dabei besteht ein wesentliches Merkmal der erfindungsgemäßen Datenverarbeitungsschaltung darin, dass die erste oder die zweite Verschlüsselungsbaugruppe so ausgebildet ist, dass die Verschlüsselung selektiv arbeitet. Dies bedeutet nicht nur, dass eine Verschlüsselung wahlweise erfolgen oder unterbleiben kann. Darüber hinaus umfasst dies gemäß der Erfindung auch, dass zwischen verschiedenen Schlüsseln zum Verschlüsseln des Datenverkehrs gewechselt werden kann. In diesem Fall bekommt der Einsatz der erfindungsgemäßen Verschlüsselungsbaugruppe ein dynamisches Verhalten.

Gerade bei der erfindungsgemäßen Datenverarbeitungsschaltung mit wechselnden Schlüsseln ist vorgesehen, dass Datenverarbeitungsschaltungen eines Fertigungsloses jeweils unterschiedliche und individuelle Schlüssel bekommen. Dadurch ist gewährleistet, dass selbst bei Kenntnis des Schlüssels einer Datenverarbeitungsschaltung noch nicht auf die Schlüssel anderer Datenverarbeitungsschaltungen geschlossen werden kann.

In Ausgestaltung des Grundgedankens der Erfindung weist die erste oder die zweite Verschlüsselungsbaugruppe wenigstens einen Eingang zur Eingabe wenigstens eines Schlüssels auf. Dieser Eingang in die Verschlüsselungsbaugruppe kann jedoch auch dazu verwendet werden, zwischen bestimmten, in der Verschlüsselungsbaugruppe selbst gespeicherten Schlüsseln und sogar zwischen den in der Verschlüsselungsbaugruppe angewendeten Verschlüsselungsverfahren umzuschalten. Es ist auch ganz einfach möglich, ein einziges Verschlüsselungsverfahren zu aktivieren bzw. zu deaktivieren. Abweichend davon kann über den Eingang auch ein außerhalb der Verschlüsselungsbaugruppe abgespeicherter Schlüssel eingegeben werden. Dazu wird der Schlüssel vorteilhafterweise in einer FLASH-Zelle oder in einer EEPROM-Zelle abgelegt. Die vorstehenden Zellen gelten als relativ sicher, weil die Informationen auf einem Floating-Gate mit nur "wenigen" Elektronen gespeichert sind. Die meisten Versuche, deren Inhalt auszulesen, zerstören die gespeicherte Information. Von daher ergibt sich gemäß dieser Ausgestaltung der Erfindung eine besonders sichere Verschlüsselung des Datenverkehrs. Weiterhin haben alle FLASH-Zellen den Vorteil der Programmierbarkeit. So können auf einfache Weise bei der Auslieferung der erfindungsgemäßen Datenverarbeitungsschaltung in jede Schaltung individuelle Schlüssel einprogrammiert und für weitere Veränderungen gesperrt werden.

Eine weitere Verbesserung der Sicherheit ergibt sich dann, wenn der Schlüssel in einer vergrabenen Struktur eines integrierten Bausteins abgelegt ist, wobei der integrierte Baustein vorteilhafterweise auch die Datenverarbeitungsschaltung aufnimmt. Vergrabene Strukturen bieten den Vorteil, daß sie dezentral an verschiedenen Stellen des integrierten Bausteins ausgeführt werden können. Dies erhöht die Sicherheit beträchtlich, da es sehr schwierig ist, verschiedene Stellen einer in einen integrierten Baustein aufgenommenen Datenverarbeitungsschaltung gleichzeitig zu beobachten. Darüber hinaus können auch Sensoren vorgesehen sein, die Manipulationen des Orts, an dem der Schlüssel abgelegt ist, abtasten und die erfindungsgemäße Datenverarbeitungsschaltung für diesen Fall deaktivieren oder sonstwie unbrauchbar machen.

Alternativ zu den bei der Herstellung der erfindungsgemäßen Datenverarbeitungsschaltung abgespeicherten Schlüsseln kann jedoch auch ein Zufallsgenerator vorgesehen sein, mit dem ein Schlüssel zufällig auswählbar ist.

Gemäß einer besonders vorteilhaften Ausgestaltung der Erfindung wird die Auswahl des in der Verschlüsselungsbaugruppe verwendeten Schlüssels von der Betriebsbaugruppe insbesondere während des Programmablaufs durchgeführt. Dazu ist die Datenverarbeitungsschaltung gemäß der Erfindung so ausgebildet, daß bei Ausführung vorbestimmter Operationen durch die Betriebsbaugruppe ein Schlüssel an die Verschlüsselungsbaugruppe eingebbar ist. Da der Programmcode der Betriebsbaugruppe eventuell bekannt sein kann, erfolgt die Schlüsselauswahl vorteilhafterweise versteckt im normalen Programmcode. So könnte die Betriebsbaugruppe beispielsweise derart ausgebildet sein, daß bei Ausführen eines unverfänglichen Befehls wie beispielsweise CLR C ("CLEAR CARRY") der Schlüssel der Verschlüsselungs-baugruppe bzw. Verschlüsselungsbaugruppen gewechselt wird.

Darüber hinaus kann auch eine Zeitmessvorrichtung vorgesehen sein, die einen Wechsel des Schlüssels überwacht, und einen solchen Wechsel auslöst, wenn der Schlüssel nicht oft genug gewechselt wird.

Schließlich ist hinsichtlich der in den Verschlüsselungsbaugruppen verwendeten Schlüssel vorgesehen, daß die Schlüssel durch die Betriebsbaugruppe bzw. die CPU erzeugt werden. Dies erfolgt beispielsweise durch Ableiten eines Schlüssels mit einem Umsetzungsverfahren aus einer durch die CPU generierten Adresse. Der Vorteil dieses Verfahrens besteht darin, daß sich der Schlüssel ständig - also mit jeder Adresse - ändert. Durch die Auswahl verschiedener Umsetzungsverfahren kann der Programmierer der Betriebsbaugruppe auf die Verschlüsselung Einfluß nehmen.

Zusammenfassend ist zu sagen, daß der Datenverkehr in der erfindungsgemäßen Datenverarbeitungsschaltung von einem Manipulierer nur dann verstanden werden kann, wenn der jeweils in der Verschlüsselungsbaugruppe verwendete Schlüssel bekannt ist. Auch die im Datenspeicher abgelegten Daten können nur unter Kenntnis des zum Datenspeicher zugehörigen Schlüssels verstanden werden. Dies erhöht die Sicherheit gegen Manipulationen beträchtlich.

Selbstverständlich muß ein Programmierer, der die Betriebsbaugruppe der Datenverarbeitungsschaltung programmiert, eine vertrauliche Liste führen, welche zum Schlüssel zugehörigen Daten er in welchen Adressen des Datenspeichers bzw. der Datenverarbeitungsschaltung abgelegt hat. Je nach Art des Schlüssels kann der Programmierer auch gewisse zu erfüllende Vorbedingungen vorsehen, die sich beispielsweise dadurch äußern, dass immer Werte-Paare gelesen werden müssen.

Gemäß der Erfindung ist die elektronische Datenverarbeitungsschaltung derart eingerichtet, dass im Bereich mindestens einer die Betriebsbaugruppe und wenigstens einen Datenspeicher verbindenden Datenleitung des Datenbus wenigstens zwei Verschlüsselungsbaugruppen vorgesehen sind, die so ausgebildet sind, dass eine vollständige Verschlüsselung bzw. Entschlüsselung erst durch das Zusammenwirken der beiden Verschlüsselungsbaugruppen ausführbar ist. Vorteilhafterweise sind die beiden Verschlüsselungsbaugruppen an verschiedenen Orten der elektronischen Datenverarbeitungsschaltung angeordnet. Durch die erfindungsgemäße Ausgestaltung ist gewährleistet, dass eine Verschlüsselung des Datenverkehrs an zwei verschiedenen Orten erfolgt. Ein typischer Manipulierer wird möglicherweise nur eine Verschlüsselung an einem einzigen Ort, nämlich bei einer einzigen Verschlüsselungsbaugruppe nachvollziehen und beim Anwenden der Verschlüsselung trotzdem zu keinem brauchbaren Ergebnis kommen. Gerade bei einer Ausführung mit zwei Verschlüsselungsbaugruppen, die an verschiedenen Orten untergebracht sind, ist es nämlich besonders schwierig, eine Verschlüsselung nachzuvollziehen, da zwei verschiedene Orte einer Mikrostruktur nur auf besonders schwierige Weise gleichzeitig beobachtet werden können. Die so ausgeführten Verschlüsselungsbaugruppen können beispielsweise dergestalt ausgeführt sein, dass eine Verschlüsselungsbaugruppe an einem Ort die unteren vier Bits eines Datenbus verschlüsselt bzw. entschlüsselt, während die andere Verschlüsselungsbaugruppe die übrigen Bits des Datenbus verschlüsselt bzw. entschlüsselt. Ein weiterer Vorteil der erfindungsgemäßen Anordnung ergibt sich bei denjenigen gattungsgemäßen Datenverarbeitungsschaltungen, bei denen man aus Sicherheitsgründen erreichen möchte, dass nicht alle Komponenten der Datenverarbeitungsschaltung miteinander kommunizieren können. Dann kann durch geeignete Ausgestaltung des Schlüssels beispielsweise mit einer definierten Anzahl von Verschlüsselungs-Einheiten nur bei den dafür vorgesehenen Verbindungswegen des Datenbus kommuniziert werden. Alle anderen Verbindungen mit nicht geeigneten Verschlüsselungen können nicht richtig funktionieren.

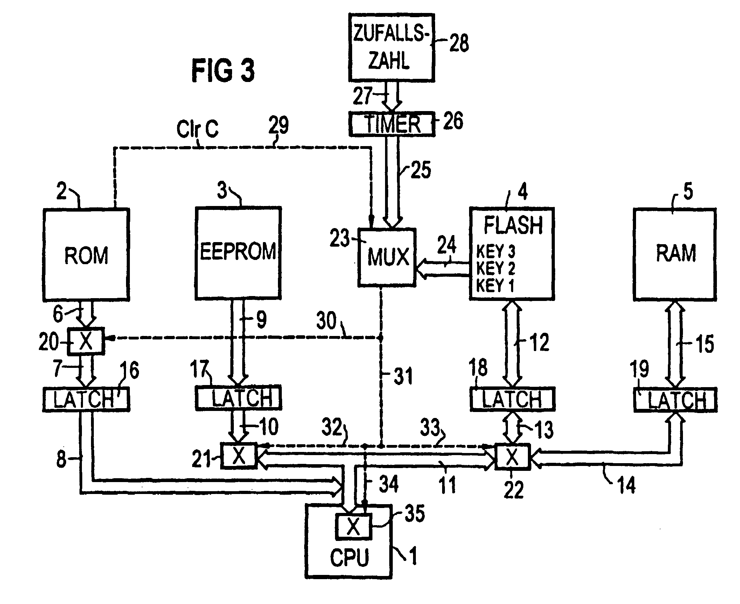

Die Erfindung ist in der Zeichnung anhand der Figur 3 näher veranschaulicht. Es zeigen:
- Figur 1: zeigt eine elektronische Datenverarbeitungsschaltung mit nur einer einzigen Verschlüsselungseinrichtung in der CPU,
- Figur 2: zeigt eine Variante der elektronischen Datenverarbeitungsschaltung aus Figur 1, und
- Figur 3: zeigt eine erfindungsgemäße elektronische Datenverarbeitungsschaltung mit Verschlüsselungseinrichtungen in der CPU sowie im Bereich der Datenspeicher.

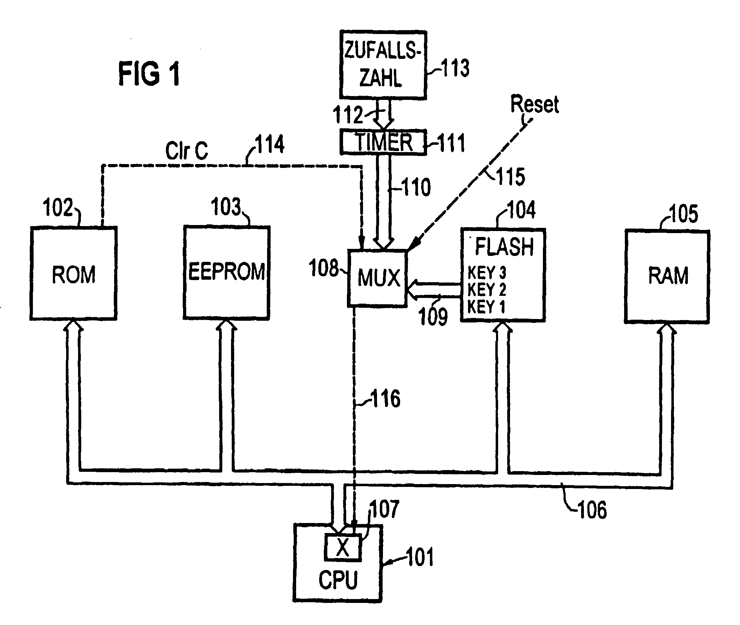

Figur 1 zeigt eine Datenverarbeitungsschaltung, die eine CPU 101 als Betriebsbaugruppe sowie mehrere Datenspeicher aufweist. Im Einzelnen sind dies ein ROM 102, ein EEPROM 103, ein FLASH-Speicher 104 sowie ein RAM 105. Die Datenspeicher 102, 103, 104, 105 und die CPU 101 sind über einen Datenbus 106 miteinander verbunden.

In der CPU 101 ist eine Verschlüsselungsbaugruppe 107 vorgesehen, die den Datenverkehr zwischen CPU 1 und den Datenspeichern 102, 103, 104 sowie 105 verschlüsselt bzw. entschlüsselt. Hier sei noch einmal darauf hingewiesen, dass die derartige Einrichtung nachfolgend mit "Verschlüsselungsbaugruppe" bezeichnet wird, obwohl sie ausdrücklich nicht auf eine Einrichtung beschränkt ist, die lediglich eine Verschlüsselung ausführt. Mit dieser Bezeichnung ist auch eine Einrichtung gemeint, die sowohl eine Verschlüsselung als auch eine Entschlüsselung bzw. nur eine dieser beiden Operationen ausführt. Die Ver- bzw. Entschlüsselung kann dabei durch eine geeignete Verzögerung, durch ein Vertauschen von einzelnen Bitleitungen des Datenbus oder durch ein Verändern der Wertigkeiten einzelner Datenbits erfolgen. Auch eine Software-Verschlüsselung kann ausgeführt werden.

Weiterhin hat die Datenverarbeitungsschaltung einen Multiplexer 108, der über eine Datenleitung 109 mit dem FLASH-Speicher 104 in Verbindung steht. Der Multiplexer 108 steht über eine Datenleitung 110 mit einem Timer 111 in Verbindung, dem über eine Datenleitung 112 von einem Zufallgenerator 113 eine Zufallszahl zuführbar ist. Der Multiplexer 108 weist auch eine Ansteuerleitung 114 auf, über die er mit dem ROM 102 in Verbindung steht. Schließlich ist noch eine RESET-Leitung 115 zum Multiplexer 108 vorgesehen, über die der Multiplexer 108 bei einem Reset der Datenverarbeitungsschaltung auf einen Grundzustand rücksetzbar ist. Der Ausgang des Multiplexers 108 steht über eine Ansteuerleitung 116 mit der Verschlüsselungsbaugruppe 107 in Verbindung, wobei die Verschlüsselungsbaugruppe 107 auf ein Ausgangssignal des Multiplexers 108 hin mit einem neuen Schlüssel versorgt wird. Es ist auch vorgesehen, dass in der Verschlüsselungsbaugruppe 107 auf ein Ausgangssignal des Multiplexers 108 über die Ansteuerleitung 116 hin das in der Verschlüsselungsbaugruppe 107 verwendete Verschlüsselungsverfahren umgeschaltet wird.

Im Betrieb verhält sich die elektronische Datenverarbeitungsschaltung wie folgt. Beim Programmstart (RESET) wird auch ein Signal auf der RESET-Leitung 115 im

Multiplexer ein Start-Schlüssel eingestellt. Daraufhin wird der Datenverkehr zwischen Datenbus 106 und CPU 101 in der Verschlüsselungsbaugruppe 107 verschlüsselt bzw. entschlüsselt, wobei bei jedem Durchgang von Daten durch die Verschlüsselungsbaugruppe 107 eine entsprechende Operation entsprechend der Datenflußrichtung ausgeführt wird. Bei jeder Ausführung des Befehls "CLR C" übermittelt das ROM 102 über die Ansteuerleitung 114 einen Ansteuerimpuls an den Multiplexer 108. Der Multiplexer 108 holt daraufhin über die Datenleitung 109 einen der drei Schüssel KEY 3, KEY 2, KEY 1 aus dem FLASH-Speicher 104 und übermittelt diesen an die Verschlüsselungsbaugruppe 107. Daraufhin wird entweder der in der Verschlüsselungsbaugruppe 107 verwendete Schlüssel ausgetauscht oder je nach Wertigkeit des auf der Ansteuerleitung 116 anliegenden Signals eine Umschaltung zwischen einem in der Verschlüsselungsbaugruppe 107 angewendeten Verschlüsselungsverfahren bewirkt. Wird eine bestimmte Betriebszeit der Datenverarbeitungsschaltung überschritten, ohne daß der Multiplexer 108 durch das ROM 102 aktiviert wird, tritt der Timer 111 in Aktion. Durch die Betätigung des Timers 111 wird dem Multiplexer 108 über die Datenleitung 110 eine Zufallszahl aus dem Zufallsgenerator 113 übermittelt. Der Multiplexer 108 übermittelt dann die Zufallszahl an die Verschlüsselungsbaugruppe 107.

Die Daten in den Datenspeichern 102, 103, 104 und 105 sind verschlüsselt abgelegt. Daher werden die Daten auf dem Datenbus 106 verschlüsselt zur CPU 101 transportiert, wo sie von der Verschlüsselungsbaugruppe 107 wieder entschlüsselt werden. Erst danach stehen die Daten unverschlüsselt zur Verarbeitung in der CPU bereit.

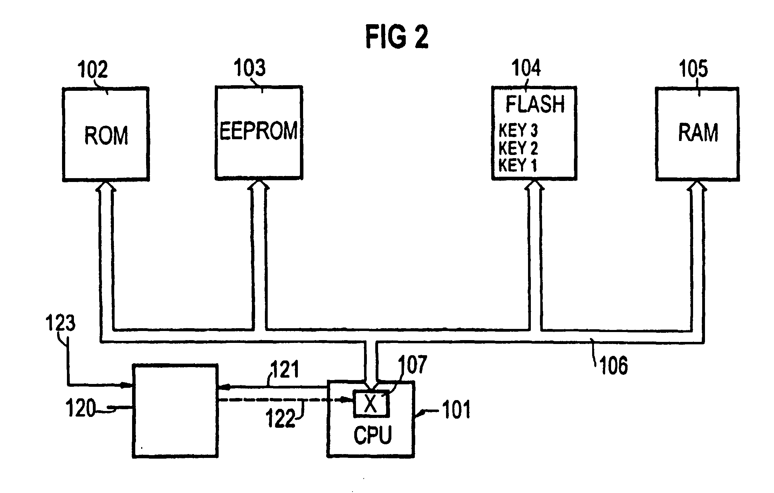

Figur 2 zeigt eine Variante der Datenverarbeitungsschaltung aus Figur 1, die ebenfalls eine CPU 101 als Betriebsbaugruppe sowie mehrere Datenspeicher aufweist. Im Einzelnen sind dies ein ROM 102, ein EEPROM 103, ein FLASH-Speicher 104 sowie ein RAM 105. Die Datenspeicher 102, 103, 104, 105 und die CPU 101 sind über einen Datenbus 106 miteinander verbunden.

In der CPU 101 ist eine Verschlüsselungsbaugruppe 107 vorgesehen, die den Datenverkehr zwischen CPU 1 und den Datenspeichern 102, 103, 104 sowie 105 verschlüsselt bzw. entschlüsselt.

Die Datenverarbeitungsschaltung aus Figur 2 hat im Gegensatz zu derjenigen aus Figur 1 keinen Multiplexer zur Versorgung der Verschlüsselungsbaugruppe 107 mit einem neuen Schlüssel. Statt dessen ist die Datenverarbeitungsschaltung aus Figur 2 über eine Ansteuerleitung 122 mit einer Umsetzungsbaugruppe 120 verbunden, die ihrerseits mit einem Adressbus 121 der CPU 101 in Verbindung steht. Zu der Umsetzungsbaugruppe 120 führt eine weitere Ansteuerleitung 123, mit der eine bestimmte Umsetzung aus einer Auswahl verschiedener in der Umsetzungsbaugruppe 120 gespeicherter Umsetzungen von "Adresse" auf "Schlüssel" auswählbar ist. Durch die Umsetzungsbaugruppe 120 wird dadurch ein Schlüssel aus einer in der CPU 101 anliegenden Adresse abgeleitet.

Im Betrieb verhält sich die elektronische Datenverarbeitungsschaltung aus Figur 2 im wesentlichen wie diejenige aus Figur 1. Beim Programmstart (RESET) wird auf ein Signal auf der Ansteuerleitung 123 ein Start-Schlüssel in der Verschlüsselungsbaugruppe 107 eingestellt. Daraufhin wird jeglicher Datenverkehr zwischen Datenbus 106 und CPU 101 in der Verschlüsselungsbaugruppe 107 verschlüsselt bzw. entschlüsselt, wobei bei jedem Durchgang von Daten durch die Verschlüsselungsbaugruppe 107 eine entsprechende Operation entsprechend der Datenflußrichtung ausgeführt wird. Bei jeder Aktivierung der Ansteuerleitung 123 leitet die Umsetzungsbaugruppe 120 auf der Basis einer neuen Umsetzung einen Schlüssel aus einer in der CPU 101 anliegenden Adresse ab.

Die Daten in den Datenspeichern 102, 103, 104 und 105 sind stets verschlüsselt abgelegt. Daher werden die Daten auf dem Datenbus 106 verschlüsselt zur CPU 101 transportiert, wo sie von der Verschlüsselungsbaugruppe 107 wieder entschlüsselt werden. Erst danach stehen die Daten unverschlüsselt zur Verarbeitung in der CPU bereit.

Die erfindungsgemäße Datenverarbeitungsschaltung aus Figur 3 hat eine CPU 1 als Betriebsbaugruppe sowie mehrere Datenspeicher. Im Einzelnen sind dies ein ROM 2, ein EEPROM 3, ein FLASH-Speicher 4 sowie ein RAM 5. Die Datenspeicher 2, 3, 4, 5 und die CPU 1 sind über einen in dieser Ansicht nicht dargestellten Datenbus miteinander verbunden. Anstelle des Datenbus sind in dieser Ansicht einzelne Datenleitungen 6, 7, 8, 9, 10, 11, 12, 13, 14 und 15 vorgesehen, über die die CPU 1 Daten mit den Datenspeichern 2, 3, 4, 5 austauscht. Zwischen der CPU 1 und dem ROM 2, dem EEPROM 3, dem FLASH 4 und dem RAM 5 ist noch je ein Latch-Zwischenspeicher 16, 17, 18, 19 angeordnet.

Im Bereich zwischen dem ROM 2 und dem Latch 16, im Bereich zwischen dem Latch 17 und der CPU 1, im Bereich zwischen den Latches 18, 19 und der CPU 1 sowie in der CPU 1 selbst sind Verschlüsselungsbaugruppen 20, 21, 22 und 35 vorgesehen, die den Datenverkehr auf den ihnen zugeordneten Datenleitungen verschlüsseln bzw. entschlüsseln. Hier sei noch einmal darauf hingewiesen, daß die derartigen Einrichtungen nachfolgend mit "Verschlüsselungsbaugruppe" bezeichnet werden, obwohl sie ausdrücklich nicht auf Einrichtungen beschränkt sind, die lediglich eine Verschlüsselung ausführen. Gemäß dem Grundgedanken der Erfindung sind mit dieser Bezeichnung auch Einrichtungen gemeint, die sowohl eine Verschlüsselung als auch eine Entschlüsselung bzw. nur eine dieser beiden Operationen ausführen. Die Ver- bzw. Entschlüsselung kann dabei durch eine geeignete Verzögerung, durch ein Vertauschen von einzelnen Bitleitungen der Datenleitungen oder durch ein Verändern der Wertigkeit einzelner Datenbits erfolgen. Auch eine Software-Verschlüsselung kann ausgeführt werden.

Die Verschlüsselungsbaugruppen 20, 21, 22 und 35 sind so ausgebildet, daß der Datenverkehr auf den ihnen zugeordneten Datenleitungen jeweils nur teilweise verschlüsselt bzw. entschlüsselt wird. Eine vollständige Verschlüsselung bzw. Entschlüsselung ergibt sich erst bei einem Zusammenwirken je einer der Verschlüsselungsbaugruppen 20, 21, 22 mit der Verschlüsselungsbaugruppe 35.

Weiterhin hat die erfindungsgemäße Datenverarbeitungsschaltung einen Multiplexer 23, der über eine Datenleitung 24 mit dem FLASH-Speicher 4 in Verbindung steht. Der Multiplexer 23 steht über eine Datenleitung 25 mit einem Timer 26 in Verbindung, dem über eine Datenleitung 27 von einem Zufallszahlgenerator 28 eine Zufallszahl zuführbar ist. Der Multiplexer 23 weist auch eine Ansteuerleitung 29 auf, über die er mit dem ROM 2 in Verbindung steht.

Der Ausgang des Multiplexers 23 steht über Ansteuerleitungen 30, 31, 32, 33, 34 mit den Verschlüsselungsbaugruppen 20, 21, 22, 35 in Verbindung, wobei die Verschlüsselungsbaugruppen 20, 21, 22, 35 auf ein Ausgangssignal des Multiplexers 23 hin mit einem neuen Schlüssel versorgt werden.

Im Betrieb verhält sich die erfindungsgemäße elektronische Datenverarbeitungsschaltung wie folgt. Bei jeder Ausführung des Befehls "CLR C" übermittelt das ROM 2 über die Ansteuerleitung 29 einen Ansteuerimpuls an den Multiplexer 23. Der Multiplexer 23 holt daraufhin über die Datenleitung 24 einen der drei Schlüssel KEY 3, KEY 2, KEY 1 aus dem FLASH-Speicher 4 und übermittelt diesen an die Verschlüsselungsbaugruppen 20, 21, 22 und 35. Wird eine vorbestimmte Betriebszeit der Datenverarbeitungsschaltung überschritten, ohne daß der Multiplexer 23 durch das ROM 2 aktiviert wird, dann tritt der Timer 26 in Aktion. Durch die Betätigung des Timers 26 wird dem Multiplexer 23 über die Datenleitung 25 eine Zufallszahl aus dem Zufallsgenerator 28 übermittelt. Der Multiplexer 23 übermittelt dann die Zufallszahl an die Verschlüsselungsbaugruppen 20, 21, 22, 35.

Die Daten im ROM 2 sind verschlüsselt abgelegt und sie werden beim Auslesen in den Latch 16 durch die Verschlüsselungsvorrichtung 20 nur teilweise entschlüsselt. Daher werden die Daten aus dem ROM 2 auf der Datenleitung 8 noch teilweise verschlüsselt bis zur CPU 1 transportiert, wo sie von der Verschlüsselungsbaugruppe 35 vollständig entschlüsselt werden. Erst danach stehen die Daten unverschlüsselt zur Verarbeitung in der CPU 1 bereit.

Die verschlüsselt im EEPROM 3 vorgesehenen Daten werden verschlüsselt über die Datenleitung 9 an den Latch 17 übermittelt und von dort an die Verschlüsselungsbaugruppe 21 weitergeleitet, wo sie teilweise entschlüsselt werden. Von dort gelangen die noch teilweise verschlüsselten Daten über die Datenleitung 11 zur CPU 1, wo sie von der Verschlüsselungsbaugruppe 35 vollständig entschlüsselt werden und danach zur Verarbeitung bereitstehen.

Daten für den FLASH-Speicher 4 und für das RAM 5 werden zunächst jeweils teilweise durch die Verschlüsselungsbaugruppe 35 und durch die Verschlüsselungsbaugruppe 22 verschlüsselt, bevor sie vollständig verschlüsselt im FLASH-Speicher 4 oder im RAM 5 abgespeichert werden. Dazu werden die in der Verschlüsselungsbaugruppe 35 der CPU 1 teilweise verschlüsselten Daten über die Datenleitung 11 an die Verschlüsselungsbaugruppe 22 übermittelt, wo sie vollständig verschlüsselt werden, bevor sie über die Datenleitungen 13 bzw. 14 an die dem FLASH-Speicher 4 und dem RAM 5 zugeordneten Latches 18, 19 übergeben werden. Von den Latches 18, 19 gelangen die verschlüsselten Daten über Datenleitungen 12, 15 zum FLASH-Speicher 4 bzw. RAM 5.

Beim Auslesen der Daten aus dem FLASH-Speicher 4 und aus dem RAM 5 werden diese zunächst jeweils teilweise durch die Verschlüsselungsbaugruppe 22 und durch die Verschlüsselungsbaugruppe 35 entschlüsselt, bevor sie vollständig entschlüsselt in der CPU 1 zur Verarbeitung bereitstehen.

## Patentansprüche

1. Elektronische Datenverarbeitungsschaltung mit einer Betriebsbaugruppe (1) wie einem Mikroprozessor (1), mit wenigstens einem Datenspeicher (2, 3, 4, 5) und mit einem sich zwischen Datenspeicher (2, 3, 4, 5) und Betriebsbaugruppe (1) erstreckenden Datenbus, wobei
**dadurch gekennzeichnet, dass**
die Daten in dem wenigstens einen Datenspeicher verschlüsselt abgelegt sind,
in der Betriebsbaugruppe (1) eine erste Verschlüsselungsbaugruppe (35), die den Datenverkehr auf den ihr zugeordneten Datenleitungen (8, 11) des Datenbusses nur teilweise verschlüsselt bzw. entschlüsselt, vorgesehen ist,
im Bereich zwischen jedem wenigstens einen Datenspeicher (2, 3, 4, 5) und der Betriebsbaugruppe (1) eine zweite Verschlüsselungsbaugruppe (20, 21, 22), die den Datenverkehr auf den ihnen zugeordneten Datenleitungen (6-15) des Datenbusses nur teilweise verschlüsselt bzw. entschlüsselt,
wobei sich eine vollständige Verschlüsselung bzw.
Entschlüsselung durch das Zusammenwirken jeder zweiten Verschlüsselungsbaugruppe (20, 21, 22) mit der ersten Verschlüsselungsbaugruppe (35) ergibt.

2. Elektronische Datenverarbeitungsschaltung nach Anspruch 1,
**dadurch gekennzeichnet, dass**
die Verschlüsselungsbaugruppen (20, 21, 22, 35) an verschiedenen Orten der elektronischen Datenverarbeitungsschaltung angeordnet sind.

3. Elektronische Datenverarbeitungsschaltung nach Anspruch 1 oder Anspruch 2,
**dadurch gekennzeichnet, dass**
die erste oder die zweite Verschlüsselungsbaugruppe (20, 21, 22, 35) so ausgebildet sind, dass der Datenverkehr mittels eines Verschlüsselungs-Algorithmus verschlüsselt wird.

4. Elektronische Datenverarbeitungsschaltung nach einem der
Ansprüche 1 bis 3,
**dadurch gekennzeichnet, dass**
die erste oder die zweite Verschlüsselungsbaugruppe (20, 21, 22, 35) so ausgebildet ist, dass der Datenverkehr mittels Hardware-Verschlüsselung verschlüsselbar ist.

5. Elektronische Datenverarbeitungsschaltung nach einem der vorhergehenden Ansprüche,
**dadurch gekennzeichnet, dass**
die erste oder die zweite Verschlüsselungsbaugruppe (20, 21, 22, 35) so ausgebildet ist, dass die Wertigkeit einzelner Bits des Datenverkehrs selektiv änderbar ist.

6. Elektronische Datenverarbeitungsschaltung nach Anspruch 5,
**dadurch gekennzeichnet, dass**
die erste oder die zweite Verschlüsselungsbaugruppe wenigstens ein EXOR-Glied aufweist.

7. Elektronische Datenverarbeitungsschaltung nach einem der
vorhergehenden Ansprüche,
**dadurch gekennzeichnet, dass**
die erste oder die zweite Verschlüsselungsbaugruppe (20, 21, 22, 35) so ausgebildet ist, dass die Anschlussreihenfolge von Datenleitungen des Datenbus selektiv änderbar ist.

8. Elektronische Datenverarbeitungsschaltung nach einem der vorhergehenden Ansprüche,
**dadurch gekennzeichnet, dass**
die erste oder die zweite Verschlüsselungsbaugruppe (20, 21, 22, 35) so ausgebildet ist, dass der Datenverkehr wenigstens teilweise selektiv verzögerbar ist.

9. Elektronische Datenverarbeitungsschaltung nach einem der
vorhergehenden Ansprüche,
**dadurch gekennzeichnet, dass**
die erste oder die zweite Verschlüsselungsbaugruppe (20, 21, 22, 35) wenigstens einen Eingang zur Eingabe wenigstens eines Schlüssels aufweist.

10. Elektronische Datenverarbeitungsschaltung nach Anspruch 9, **dadurch gekennzeichnet, dass**
der bzw. die Schlüssel in einer Flash-Zelle der Datenverarbeitungsschaltung abgelegt ist bzw. sind.

11. Elektronische Datenverarbeitungsschaltung nach Anspruch 9 oder 10,
**dadurch gekennzeichnet, dass**
der Schlüssel in einer vergrabenen Struktur eines integrierten Bausteins zur Aufnahme der Datenverarbeitungsschaltung abgelegt ist.

12. Elektronische Datenverarbeitungsschaltung nach Anspruch 9 oder 10,
**dadurch gekennzeichnet, dass**
eine Sensorik zum Abtasten von Manipulationen des Orts, an dem der Schlüssel abgelegt ist, aufweist.

13. Elektronische Datenverarbeitungsschaltung nach einem der Ansprüche 9 bis 12,
**dadurch gekennzeichnet, dass**
die Datenverarbeitungsschaltung so ausgebildet ist, dass bei Ausführung vorbestimmter Operationen durch die Betriebsbaugruppe ein Schlüssel in die Verschlüsselungsbaugruppe (20, 21, 22, 35, 107) eingebbar ist.

14. Elektronische Datenverarbeitungsschaltung nach einem der Ansprüche 9 bis 13,
**dadurch gekennzeichnet, dass**
ein Zufallsgenerator (28) vorgesehen ist, mit dem ein Schlüssel zufällig auswählbar ist.

15. Elektronische Datenverarbeitungsschaltung nach einem der Ansprüche 9 bis 14,
**dadurch gekennzeichnet, dass**
eine Einrichtung (120) zum Ableiten eines Schlüssels aus einer in der Betriebsbaugruppe (101) verwendeten Adresse vorgesehen ist.

16. Elektronische Datenverarbeitungsschaltung nach einem der Ansprüche 9 bis 14,
**dadurch gekennzeichnet, dass**
eine Zeitmessvorrichtung (26) vorgesehen ist, durch die ein Wechsel des Schlüssels einleitbar ist.

## Claims

1. An electronic data processing circuit, comprising an operating module (1) such as a microprocessor (1), at least one data memory (2, 3, 4, 5) and at least one data bus connected between said data memory (2, 3, 4, 5) and said operating module (1), wherein
data are disposed encoded in said at least one data memory,
**characterized in that**
a first encoding module (35), which only partially encodes and decodes data traffic on the data lines (8, 11) of the data bus assigned thereto, respectively, is provided in the operating module (1),
a second encoding module (20, 21, 22) in the portion between each at least one data memory (2, 3, 4, 5) and the operating module (1), which only partially encodes and decodes data traffic on the data lines (6-15) of the data bus assigned thereto, respectively, is provided,
wherein a complete encoding and decoding by cooperating of each second encoding module (20, 21, 22) with the first encoding module (35) results.

2. The electronic data processing circuit according to claim 1,
**characterized in that**
said encoding modules (20, 21, 22, 35) are disposed at different locations of the electronic data processing circuit.

3. The electronic data processing circuit according to claim 1 or claim 2,
**characterized in that**
the first or the second encoding module (20, 21, 22, 35) are designed in such a manner that data traffic is encoded by an encoding algorithm.

4. The electronic data processing circuit according to one of claims 1 to 3,
**characterized in that**
the first or the second encoding module (20, 21, 22, 35) is designed such that data traffic can be encoded by hardware encoding.

5. The electronic data processing circuit according to one of the preceding claims,
**characterized in that**
the first or the second encoding module (20, 21, 22, 35) is designed such that the significance of individual bits of data traffic can be selectively changed.

6. The electronic data processing circuit according to claim 5,
**characterized in that**
the first or the second encoding module comprises at least one EXOR element.

7. The electronic data processing circuit according to one of the preceding claims,
**characterized in that**
the first or the second encoding module (20, 21, 22, 35) is designed such that the connecting sequence of data lines of said data bus can be selectively changed.

8. The electronic data processing circuit according to one of the preceding claims,
**characterized in that**
the first or the second encoding module (20, 21, 22, 35) is designed such that data traffic can be at least in part selectively delayed.

9. The electronic data processing circuit according to one of the preceding claims,
**characterized in that**
the first or the second encoding module (20, 21, 22, 35) comprises at least one input for inputting at least one key.

10. The electronic data processing circuit according to claim 9,
**characterized in that**
the key or the keys is/are disposed in a flash cell of the data processing circuit.

11. The electronic data processing circuit according to claim 9 or 10,
**characterized in that**
the key is disposed in a buried structure of an integrated module for accommodating the data processing circuit.

12. The electronic data processing circuit according to claim 9 or 10,
**characterized in that**
it comprises a sensor for sampling manipulations of a location at which said key is stored.

13. The electronic data processing circuit according to one of claims 9 to 12,
**characterized in that**
the data processing circuit is designed such that during execution of predetermined operations by said operating module a key can be input into said encoding module (20, 21, 22, 35, 107).

14. The electronic data processing circuit according to one of claims 9 to 13,
**characterized in that**
a random generator (28) is provided for randomly selecting a key.

15. The electronic data processing circuit according to one of claims 9 to 14,
**characterized in that**
a device (120) is provided for deriving a key from an address used in said operating module (101).

16. The electronic data processing circuit according to one of claims 9 to 14,
**characterized in that**
a time-measuring device (26) is provided for initiating a change of said key.

## Revendications

1. Circuit électronique de traitement de données, comprenant un module (1) de fonctionnement, comme un microprocesseur (1), au moins une mémoire (2, 3, 4, 5) de données et un bus de données s'étendant entre la mémoire (2, 3, 4, 5) de données et le module (1) de fonctionnement, dans lequel
les données sont mémorisées de manière chiffrée dans la au moins une mémoire de données,
**caractérisé en ce que**
il est prévu, dans le module (1) de fonctionnement, un premier module (35) de chiffrement qui ne chiffre ou ne déchiffre que partiellement le trafic de données sur les lignes (8, 11) de données du bus de données qui lui sont associées,
dans la partie comprise entre chaque au moins une mémoire (2, 3, 4, 5) de données et le module (1) de fonctionnement est prévu un deuxième module (20, 21, 22) de chiffrement, qui ne chiffre ou ne déchiffre que partiellement le trafic de données sur les lignes (6 à 15) de données du bus de données qui lui sont associées,
un chiffrement ou un déchiffrement complet étant obtenu par la coopération de chaque deuxième module (20, 21, 22) de chiffrement avec le premier module (35) de chiffrement.

2. Circuit électronique de traitement de données suivant la revendication 1,
**caractérisé en ce que** les modules (20, 21, 22, 35) de chiffrement sont disposés en des emplacements différents du circuit électronique de traitement de données.

3. Circuit électronique de traitement de données suivant la revendication 1 ou revendication 2,
**caractérisé en ce que**
le premier ou le deuxième module (20, 21, 22, 35) de chiffrement sont constitués de manière à ce que le trafic de données soit chiffré au moyen d'un algorithme de chiffrement.

4. Circuit électronique de traitement de données suivant l'une des revendications 1 à 3,
**caractérisé en ce que**
lé premier ou le deuxième module (20, 21, 22, 35) de chiffrement est constitué de manière à pouvoir chiffrer le trafic de données au moyen d'un chiffrement hardware.

5. Circuit électronique de traitement de données suivant l'une des revendications précédentes,
**caractérisé en ce que** le premier ou le deuxième module (20, 21, 22, 35) de chiffrement est constitué de manière à pouvoir modifier sélectivement la valeur significative de divers bits du trafic de données.

6. Circuit électronique de traitement de données suivant la revendication 5,
**caractérisé en ce que**
le premier ou le deuxième module de chiffrement comporte au moins un élément OU exclusif.

7. Circuit électronique de traitement de données suivant l'une des revendications précédentes,
**caractérisé en ce que**
le premier ou le deuxième module (20, 21, 22, 35) de chiffrement est constitué de manière à pouvoir modifier sélectivement la succession de raccordement des lignes de données du bus de données.

8. Circuit électronique de traitement de données suivant l'une des revendications précédentes,
**caractérisé en ce que**
le premier ou le deuxième module (20, 21, 22, 35) de chiffrement est constitué de manière à pouvoir ralentir sélectivement, au moins en partie, le trafic de données.

9. Circuit électronique de traitement de données suivant l'une des revendications précédentes,
**caractérisé en ce que**
le premier ou le deuxième module (20, 21, 22, 35) de chiffrement comporte au moins une entrée d'acquisition d'au moins une clef.

10. Circuit électronique de traitement de données suivant la revendication 9,
**caractérisé en ce que**
la ou les clefs est ou sont mémorisée(s) dans une cellule flash du circuit de traitement de données.

11. Circuit électronique de traitement de données suivant la revendication 9 ou 10,
**caractérisé en ce que**
la clef est mémorisée dans une structure enterrée d'un module intégré pour la réception du circuit de traitement de données.

12. Circuit électronique de traitement de données suivant la revendication 9 ou 10,
**caractérisé en ce qu'**il comporte un capteur pour détecter des manipulations de l'emplacement ou la clef est mémorisée.

13. Circuit électronique de traitement de données suivant l'une des revendications 9 à 12,
**caractérisé en ce que**
le circuit de traitement de données est constitué de manière à pouvoir, lors de la réalisation d'opérations déterminées à
l'avance, entrer par le module de fonctionnement, une clef dans le module (20, 21, 22, 35, 107) de chiffrement.

14. Circuit électronique de traitement de données suivant l'une des revendications 9 à 13,
**caractérisé en ce qu'**il est prévu un générateur (28) de nombres aléatoires, par lequel on peut choisir une clef au hasard.

15. Circuit électronique de traitement de données suivant l'une des revendications 9 à 14,
**caractérisé en ce qu'**il est prévu un dispositif (120) pour déduire une clef à partir d'une adresse utilisée dans le groupe (101) de fonctionnement.

16. Circuit électronique de traitement de données suivant l'une des revendications 9 à 14,
**caractérisé en ce qu'**il est prévu un dispositif (26) de mesure du temps, par lequel un changement de la clef peut être fait.
